# EUROPÄISCHE PATENTSCHRIFT

(11) **EP 2 540 561 B1**
(45) Veröffentlichungstag und Bekanntmachung des Hinweises auf die Patenterteilung: **13.07.2016**
(21) Anmeldenummer: 12006445.6
(22) Anmeldetag: 02.10.2008
(51) Int. Cl.: B60N 2/12, B60N 2/20, B60N 2/30, B60N 2/36

(54) **Fahrzeugsitz**
Vehicle seat
Siège de véhicule

(30) Priorität: 02.10.2007 DE 102007047348; 28.01.2008 DE 102008006414
(43) Veröffentlichungstag der Anmeldung: 02.01.2013
(62) Teilanmeldung aus: 08802766.9
(73) Patentinhaber: Johnson Controls GmbH, 51399 Burscheid (DE)
(72) Erfinder: Flucht, Stefan, 42699 Solingen (DE); Szegeny, Peter, 51371 Leverkusen (DE); Kuzma, Martin L., 91108 Trencin (SK); Ogorek, Richard, 91101 Trecin (SK)
(74) Vertreter: Wolff, Felix

(56) Entgegenhaltungen:
- WO-A-98/54024
- DE-A1- 10 123 776
- DE-A1- 10 201 897
- DE-A1- 10 229 599
- US-B1- 6 250 704

## Beschreibung

Die Erfindung betrifft einen Fahrzeugsitz mit einem Sitzteil und einer Rückenlehne, die jeweils reversibel von einer Gebrauchs- in eine Verstaustellung überführbar sind. Derartige Fahrzeugsitze sind beispielsweise aus der DE 101 23 776 A1 sowie der US 6, 250, 704 bekannt. Des weiteren sind Fahrzeugsitze mit einer Verstellmöglichkeit bekannt, bei der zunächst das Sitzteil von einer Gebrauchsstellung nach vorne geschwenkt und anschließend die Rückenlehne in den zuvor vom Sitzteil eingenommenen Raum in eine Ladebodenstellung geschwenkt wird ("Flip-. and-fold-Handhabungsweise"). Ferner sind Fahrzeugsitze bekannt, die in eine Easy-Entry-Position verstellbar sind. Beispielsweise offenbart DE 102 01 897 A1 eine gattungsgemässe Vorrichtung die Sitze von Fahrzeugen stützt sodass die Sitze verschiebbar sind.

Der Erfindung liegt die Aufgabe zugrunde, einen gattungsgemäßen Fahrzeugsitz zur Verfügung zu stellen, der einen erhöhten Bedienkomfort aufweist.

Gelöst wird die Aufgabe mit einem Fahrzeugsitz mit einem Sitzteil und einer Rückenlehne gemäß Anspruch 1.

Der Fahrzeugsitz weist ein Sitzteil, auf dem der Fahrzeuginsasse Platz nimmt, und eine Rückenlehne auf. Sowohl die Rückenlehne als auch das Sitzteil sind von einer Gebrauchsstellung, in der der Fahrzeugsitz von einem Fahrzeuginsassen belegt werden kann, in eine Verstaustellung überführbar. In der Verstaustellung wird die Rückenlehne vorzugsweise in eine im Wesentlichen horizontale Lage geneigt, so dass ihre dem Fahrzeuginsassen abgewandte Seite als Lade- und/oder Auflagefläche dienen kann. Das Sitzteil wird bei der Überführung in die Verstaustellung ebenfalls in seiner Lage verändert. Vorzugsweise wird das Sitzteil zur Überführung in die Verstaustellung um eine Drehachse, die sich im Bereich der Schenkelauflage oder davor befindet, besonders bevorzugt um etwa 90°, gedreht, so dass der Raum, den sie in der Gebrauchsstellung eingenommen hat, beispielsweise für die Verstaustellung der Rückenlehne zur Verfügung steht. Vorzugsweise ist das Sitzteil in der Verstaustellung im Wesentlichen Vertikal angeordnet. Die Bewegung des Sitzteils muss keine Reine Drehbewegung sein, sondern kann durch andere Bewegungskomponenten überlagert sein. Bei der Überführung des Sitzteils muss, im Sinne der vorliegenden Erfindung, nicht das gesamte Sitzteil verlagert werden. Beispielsweise reicht es, wenn die Sitzteilstruktur stehen bleibt und nur die Sitzschale verlagert wird. Vorzugsweise ist der Fahrzeugsitz mittels einer Unter- und Oberschiene längsverschieblich angeordnet. Vorzugsweise ist die Neigung der Rückenlehne zu Komfortzwecken verstellbar.

Der Fahrzeugsitz weist einen Sensor auf, der die Lage des Sitzteils erfasst, d.h. ob sich der Fahrzeugsitz in der Gebrauchs- oder in der Verstaustellung befindet. Dieser Sensor kann ein elektrisch/elektronischer oder ein mechanischer Sensor sein, wobei es sich vorzugsweise um einen mechanischen Sensor handelt. Abhängig von dem Sensor, d.h. von seinem Signal oder seiner Stellung, wird dann die Bewegung der Rückenlehne beim Überführen von der Gebrauchs- in die Verstaustellung beeinflusst, beispielsweise der mögliche Drehwinkel verändert.

Vorzugsweise ist der Fahrzeugsitz in eine sogenannte Easy-Entry-Stellung überführbar. In dieser Easy-Entry-Stellung wird der gesamte Fahrzeugsitz vorzugsweise in seiner Lage verändert, insbesondere in oder gegen die Fahrtrichtung verlagert. Weiterhin wird die Rückenlehne um einen gewissen Grad in Richtung des Sitzteils geneigt, wobei dieser Neigungsgrad geringer ist als in der Verstaustellung. Vorzugsweise ist die Rückenlehne zur Überführung von der Gebrauchs- in die Easy-Entry- oder in die Verstaustellung um eine, insbesondere dieselbe, Drehachse drehbar.

In einer bevorzugten Ausführungsform ist der Sensor mit einem Mittel wirkverbunden, das den Drehwinkel der Rückenlehne begrenzt, solang sich der Fahrzeugsitz in der Gebrauchsstellung befindet. Diese bevorzugte Ausführungsform hat den Vorteil, dass die Rückenlehne nur in die Easy-Entry-Stellung überführt werden kann, solange sich das Sitzteil in seiner Gebrauchsstellung befindet. Dies wird, besonders bevorzugt, dadurch erreicht, dass der Sensor ein Sperrelement aktiviert, solange sich das Sitzteil in der Gebrauchsstellung befindet. Vorzugsweise ist dieses Sperrelement an der Rückenlehne angeordnet und überträgt im aktivierten Zustand seine Drehbewegung auf ein Drehorgan, das den Drehwinkel der Rückenlehne einschränkt, so dass diese vorzugsweise nur in ihre Easy-Entry-Stellung überführbar ist. Besonders bevorzugt wirkt das Drehorgan wahlweise mit einem Längsverschiebungsarretierungsmittel zusammen. Diese Ausführungsform hat den Vorteil, dass bei der Überführung der Rückenlehne lediglich in die Easy-Entry-Stellung auch, vorzugsweise der gesamte Fahrzeugsitz entriegelt dann längsverschoben werden kann. Diese ist für den Easy-Entry-Mechanismus vorteilhaft.

Erfindungsgemäß weist der Fahrzeugsitz einen Sensor auf, der die Längsstellung des Sitzteils in der Easy-Entry-Stellung erfasst.

Vorzugsweise aktiviert der Sensor gegebenenfalls ein Sperrmittel, das die Bewegung der Lehne begrenzt.

Im Folgenden wird die Erfindung anhand der Figuren 1 - 16 erläutert. Diese Erläuterungen sind lediglich beispielhaft und schränken den allgemeinen Erfindungsgedanken nicht ein.

Von den beigefügten Zeichnungen zeigen:
- Fig. 1: einen oberen Abschnitt einer Betätigungskinematik gemäß dem Stand der Technik, in teilweiser, schematischer Darstellung;
- Fig. 2: die Betätigungskinematik von Fig. 1 im Bereich des Sensorarms;
- Fig. 3: die Betätigungskinematik von Fig. 1 im Bereich des Führungsarms;
- Fig. 4: die Betätigungskinematik von Fig. 1 im die Klinke umgebenden Bereich, mit dem Drehorgan gekoppelter Klinke;
- Fig. 5: die Anordnung von Fig. 4 mit nach vorne geneigtem Lehnenabschnitt;
- Fig. 6: einen unteren Abschnitt der Betätigungskinematik gemäß dem Stand der Technik, in teilweiser, schematischer Darstellung;
- Fig. 7: die Betätigungskinematik von Fig. 1 im die Klinke umgebenden Bereich, mit vom Drehorgan entkoppelter Klinke;
- Fig. 8: die Anordnung von Fig. 7 mit nach vorne geneigtem Lehnenabschnitt, und
- Fig. 9: einzelne Komponenten der Betätigungskinematik gemäß dem Stand der Technik, in. Explosionsdarstellung.
- Fig. 1013,16: zeigen eineweitere Ausführungsform eines Fahrzeugsitzes gemäß dem Stand der Technik;

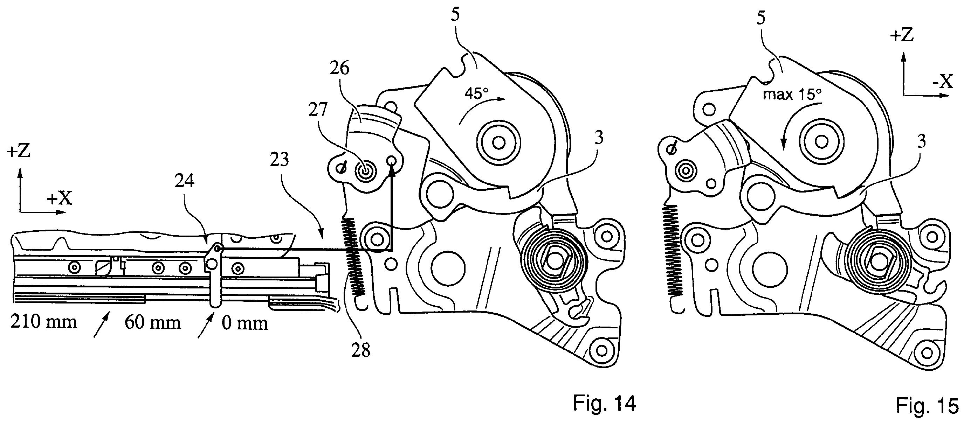

- Fig. 14 -15: zeigen Ausführungsformen des erfindungsgmäßen Fahrzeugsitzes.

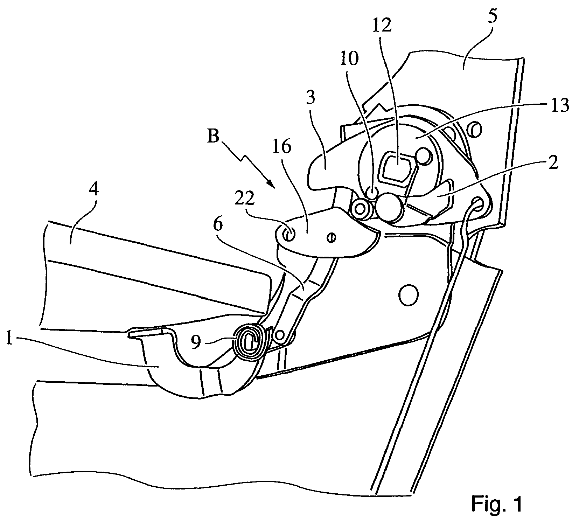

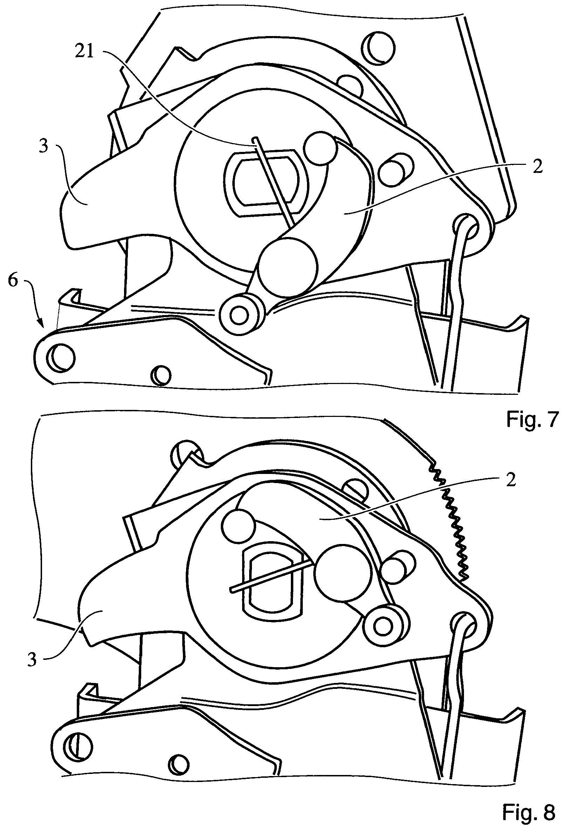

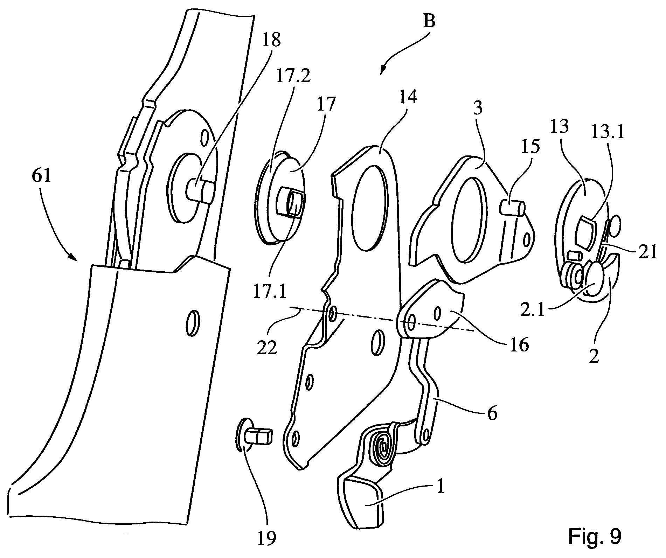

Die Figuren 1 und 9 zeigen in teilweiser, schematischer Darstellung einen oberen Abschnitt einer Betätigungskinematik B für einen Fahrzeugsitz gemäß dem Stand der Technik. Der Fahrzeugsitz umfasst eine, nur in teilweiser Darstellung gezeigte, Sitzpolsterschale 4, die um eine nicht dargestellte, horizontale erste Schwenkachse von einer Gebrauchsstellung nach vorne, d.h. von der vertikalen Rückenlehne weg, in eine vordere Verstaustellung hochgeschwenkt werden kann, in der sie im Wesentlichen vertikal ausgerichtet ist. Ein neigungsverstellbarer, mit der, nicht dargestellten, Rückenlehne mit rotierender Lehnenabschnitt 5 ist um eine horizontale zweite Schwenkachse 18 drehbar, die sich an dem Sitzteil abstützt. Der Fahrzeugsitz ist ferner mit einer Längsverstelleinrichtung versehen, die einen nicht dargestellten Sitzgleitmechanismus zum Einstellen der Längsposition des Fahrzeugsitzes in Bezug auf den Fahrzeugboden, sowie eine in Figur 8 ersichtliche Längsarretierungsklinke 7 aufweist, mit der der Fahrzeugsitz in der Längsposition arretierbar ist.

Wie insbesondere aus den Figuren 1 und 9 ersichtlich umfasst die Betätigungskinematik B einen, um eine erste horizontale Drehachse 19 drehbar an einem Beschlagteil 14 befestigten Sensorarm 1, der gelenkig mit einem Führungsarm 6 verbunden ist, dessen Bewegung mechanisch mit einer ebenfalls an dem Beschlagteil 14 drehbar angeordneten Kurvenscheibe 16 gekoppelt ist und diese um deren Drehachse 22 dreht. Die Kurvenscheibe 16 weist eine Leitfläche 60 auf, auf der eine Rolle 20 abrollt, die drehbar an einer Klinke 2 angeordnet ist. Diese Klinke 2 ist um eine Drehachse 2.1 drehbar angerordnet, die mit einem Drehteil 13 verbunden ist. Dieses Drehteil 13 ist unter Zusammenspiel der Form- und/oder Kraftschlussmittel 13. 1 und 17.1 drehfest mit einem Lager 17 verbunden. Das Lager 17 ist wieder um unter Zusammenspiel der Welle 18 und dem Formschlussmittel 17.1 drehfest mit dem Lehnenabschnitt 5 verbunden. Demnach dreht eine Drehung des Lehnenabschnitts 5 letztendlich auch die Klinke 2. Das Lager 17 umfasst des weiteren eine Lagerfläche 17.2, auf der ein Drehorgan 3 drehbar gelagert ist.

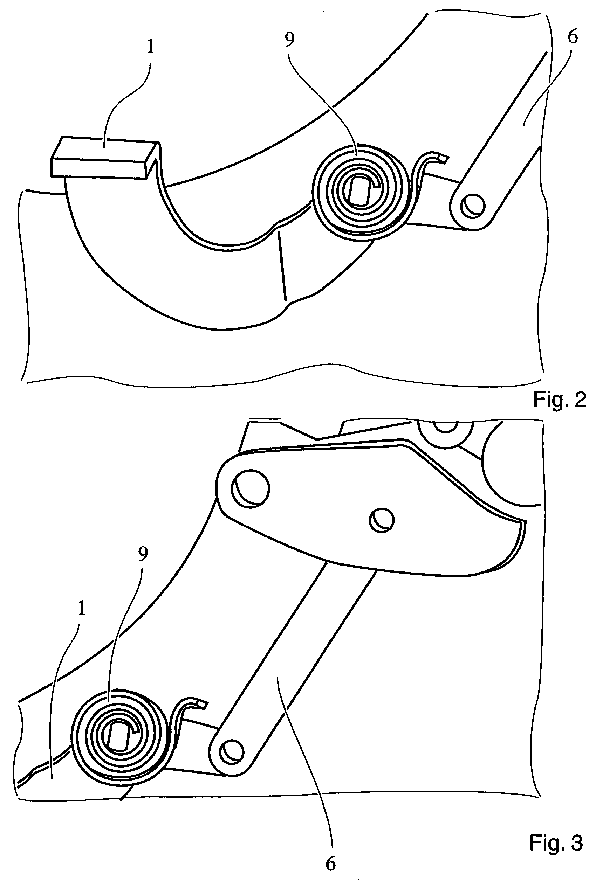

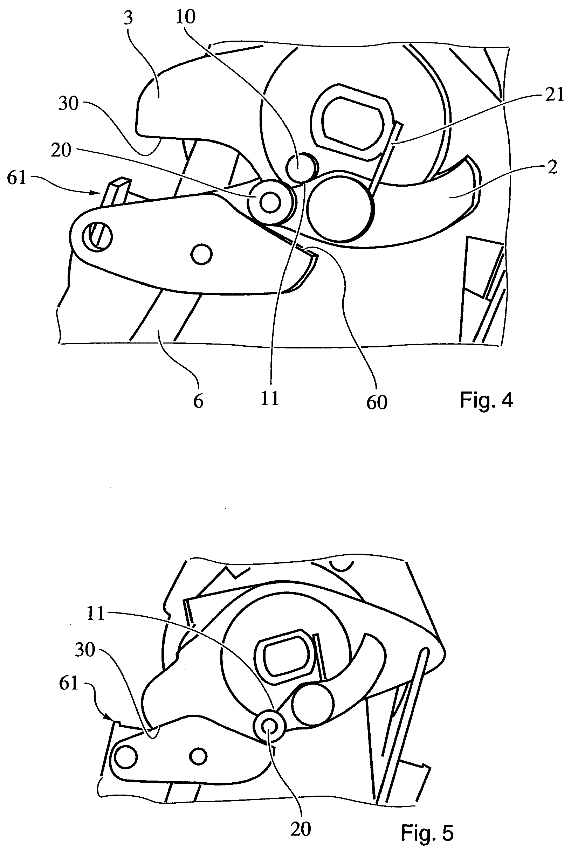

Wenn die Sitzpolsterschale 4 von der vorgeklappten Stellung in die Gebrauchsstellung bewegt wird, wird der Sensorarm 1, dessen nähere Umgebung in Figur 2 gezeigt ist, gegen den Widerstand einer Drehfeder 9 entgegen dem Uhrzeigersinn gedreht. Die Bewegung des Sensorarms 1 wird auf den gelenkig mit dem Sensorarm 1 verbundenen Führungsarm 6 übertragen; dessen unmittelbare Umgebung in Figur 3 gezeigt ist. Der Führungsarm 6 betätigt über die Kurvenscheibe 16 seinerseits die Klinke 2, d.h. versetzt letztere, gegen den Widerstand einer Drahtfeder 21 in eine Drehbewegung entgegen dem Uhrzeigersinn, wodurch die Klinke 2 in eine Position gebracht wird, bei der sichergestellt ist, dass ein in der Klinke 2 vorgesehener Kopplungsschlitz 11 und ein am Drehorgan 3 vorgesehener Anschlagbolzen 10 miteinander in Eingriff gelangen, um so die Drehbewegung der Klinke 2 und die Drehbewegung des Drehorgans 3 mechanisch miteinander zu koppeln. Die Situation, bei der Anschlagbolzen und der Kopplungsschlitz in Eingriff gelangen ist in Figur 4 gezeigt. Bei einer durch das Vorklappen der Rückenlehne bewirkten Drehung der Klinke 2 nimmt letzere das Drehorgan 3 mit, so dass auch dieses in eine Drehbewegung entgegen dem Uhrzeigersinn versetzt wird. Bei ihrer Drehbewegung stützt sich die Klinke 2 über eine an der Klinke 2 vorgesehene Rolle 20, die auf einer am Führungsarm 6 vorgesehenen Leitfläche 60 abrollt, am Führungsarm 6 ab, wodurch die Klinke 2 stets in einer verriegelnden Position relativ zum Drehorgan 3 gehalten wird, bei der der Kopplungsschlitz11 und der Anschlagbolzen 10 miteinander in Eingriff bleiben. Die Drehbewegung des Drehorgans 3 und damit auch der mit dem Drehorgan 3 mechanisch gekoppelten Klinke 2 und letztlich der Rückenlehne wird durch einen, vorzugsweise am Sitzteil vorgesehenen Stopanschlag 61 begrenzt, wenn letzterer mit einer Anschlagkante 30 des Drehorgans 3 in Anlage gelangt. Die Situation, bei der die Anschlagkante 30 am Stopanschlag 61 anliegt ist in Figur 5 gezeigt. Auf diese Weise kann die Klappbewegung des Lehnenabschnitts, und damit der Rückenlehne, auf eine der Easy-Entry-Stellung der Rückenlehne entsprechende maximale Neigung gegenüber der Senkrechten begrenzt werden.

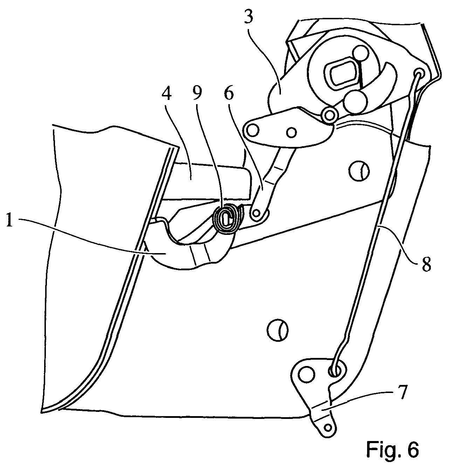

Gleichzeitig wird mittels des Übertragungsmechanismus, der einen mit dem Drehorgan 3 gelenkig verbundenen steifen Übertragungsstab 8 umfasst, durch Bestätigung des Drehorgans 3 die Längsarretierungsklinke 7 in ihre in Figur 6 gezeigte Entriegelungsstellung überführt, wonach der Fahrzeugsitz in Längsrichtung verstellt werden kann.

Wenn die Sitzpolsterschale 4 nun von der Gebrauchsstellung nach vorne geklappt wird, entfällt die durch die Kraftbeaufschlagung des Sensorarms 1 durch die Sitzpolsterschale 4 entstehende Gegenkraft, welche den Führungsarm 6 gegen der Wirkung der Drehfeder 9 in seiner Position hält. Dadurch wird der Führungsarm 6 unter dem Einfluss der elastischen Kraft der Drehfeder 9 in die in Figur 7 gezeigte Stellung bewegt, in der sich der Führungsarm 6 außer Kontakt mit der Klinke 2 befindet. Letztere wird von der Drahtfeder 21 in eine Stellung bewegt, in der der Kopplungsschlitz 11 und der am Drehorgan 3 vorgesehene Anschlagbalzen 10 unter Aufhebung der mechanischen Kopplung zwischen der Klinke 2 und dem Drehorgan 3 außer Eingriff geraten.

Jetzt kann die Klinke 2, wie in Figur 8 gezeigt, ohne dass ihr Kopplungsschlitz 11 in Eingriff mit dem Anschlagbeizen 10 gelangen kann, so weit entgegen dem Uhrzeigersinn gedreht werden, dass die mit der Klinke 2 mit rotierende Rückenlehne 5 nach vorne weit über die Easy-Entry-Stellung hinaus bis in eine Ladebodenstellung (Verstaustellung), in den von der Sitzpolsterschale bei dessen Vorklappen freigegebenen Raum, geschwenkt werden kann. Somit ist eine Flip-and fold-Handhabungsweise realisiert. Die Entkopplung der Bewegung des Drehorgans 3 von der Bewegung der Klinke 2 hat zwangsläufig auch die Entkopplung der Bewegung der Längsarretierungsklinke 7 von der Bewegung der Klinke 2 zur Folge, so dass die Rückenlehne nach vorne geschwenkt werden kann, ohne dass dabei die Längsarretierungsklinke 7 betätigt bzw. in ihre Entriegelungsposition überführt wird.

Die Funktionstüchtigkeit des durch den Sensorarm 1 realisierten, die Position der Sitzpolsterschale 4 erfassenden, mechanischen Sensors ist für alle Rückenlehnenstellungen (Komfortstellungen) gewährleistet.

Bei dem Fahrzeugsitz gemäß dem Stand der Technik muss der Benutzer demnach nicht wählen, ob er die Rückenlehne in die Easy-Entry- oder die Gebrauchsstellung überführen möchte. Solange sich der Sitzteil in seiner Gebrauchsstellung befindet, kann die Rückenlehne nur in die Easy-Entry-Position geschwenkt werden. Befindet sich das Sitzteil jedoch in der Verstaustellung, wird die Rückenlehne bei Anlegung eines Drehmomentes automatisch in seine Verstauposition verschwenkt.

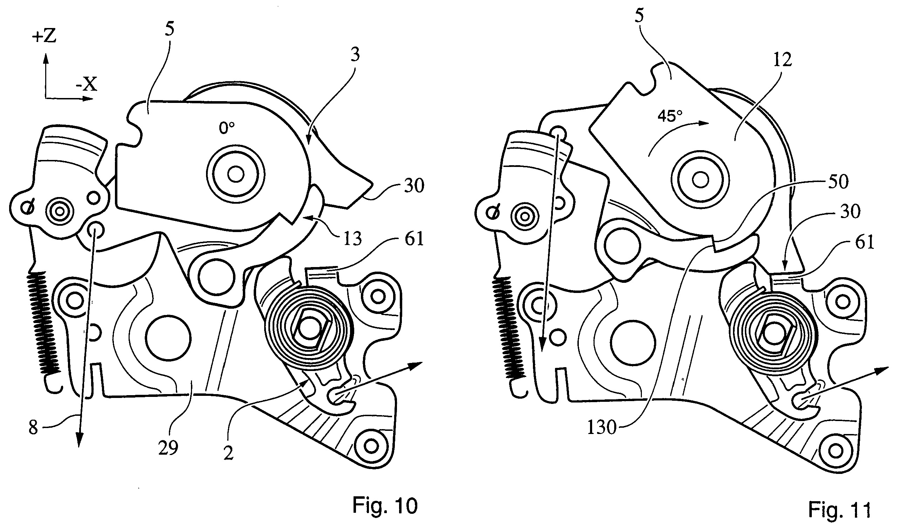

Figuren 10 - 13 zeigen eine weitere Ausführungsform eines Fahrzeugsitzes gemäß dem Stand der Technik. An einer Platte 29, die mit dem Sitzteil verbunden ist, ist drehbar um die Drehachse 12 der Lehnenabschnitt 5 und das Drehorgan 3 angeordnet. Das Drehorgan 3 umfasst des Weiteren das Drehteil 13, das um die Drehachse 12 drehbar an dem Drehorgan 3 gelagert ist. Das Drehorgan 3 ist mittels der Drehfeder 31 gegen den Uhrzeigersinn drehend vorgespannt. An dem Drehorgan 3 ist das Kabel 8 angeordnet, dass mit einer Längsarretierungsklinke 7 verbunden ist und dadurch die Ober und die Unterschiene voneinander entriegeln können. Des Weiteren ist an der Platte 29 das Sperrelement 2 drehbar um die Drehachse 22 gelagert und mittels der Drehfeder 9 gegen den Uhrzeigersinn drehend vorgespannt. Das Sperrelement ist über das Kabel 8 mit einem Sitzteilsensor (nicht dargestellt) verbunden.

In Figur 10 den Fahrzeugsitz in seiner Gebrauchsstellung. Das Sitzteil ist in einer waagerechten und die Rückenlehne im Wesentlichen in einer Senkrechten Stellung was durch den Winkel "0 deg" symbolisiert werden soll. Das Sperrelement befindet sich in seiner sperrenden Stellung und drückt dabei das Drehteil 13 in Richtung des Lehnenabschnitts 5, sodass die Anschläge 50, 130 so zusammenwirken, dass die Teile 5, 3 im Uhrzeigersinn nur gemeinsam verdreht werden können.

Die Verdrehung der Rückenlehne 5 in die Easy-Entry-Stellung ist in Figur 11 dargestellt. Der Lehnenabschnitt 5 wird im Uhrzeigersinn um 45° in Richtung des Sitzteils geschwenkt und nimmt dabei das Drehorgan 3 mit, bis dessen Anschlagkante 30 mit dem Stopanschlag 61 an der Platte 29 des Sitzteils zusammenstößt und eine weitere Drehung der Teile 3, 5 dadurch begrenzt wird. Durch die Drehung des Drehorgans 3 wird Zug auf das Kabel 8 ausgeübt, wodurch die Verriegelung zwischen der Ober- und der Unterschiene gelöst wird und der Fahrzeugsitz längsverschiebbar ist.

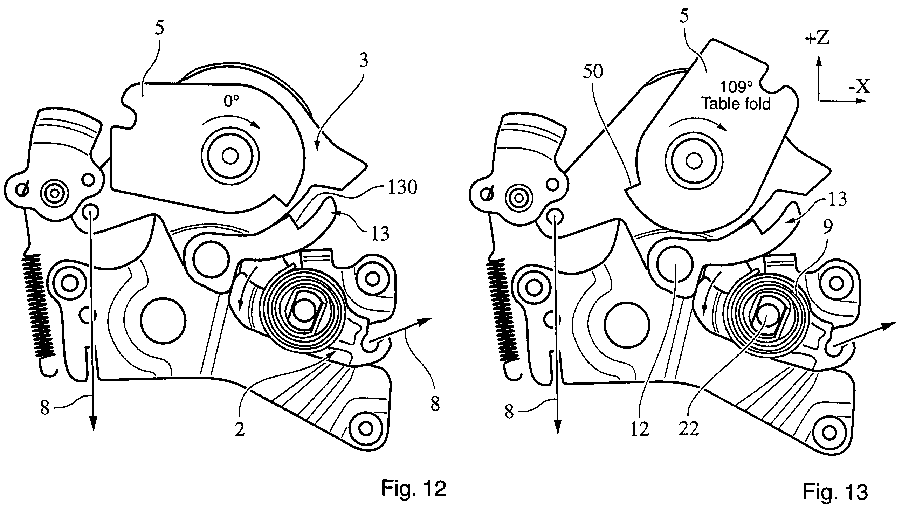

Figur 12 zeigt die Situation, in der das Sitzteil in einer Verstaustellung insbesondere eine vertikale Stellung verbracht worden ist. Dadurch wird Zug auf das Kabel 8 ausgeübt, das das Sperrelement 2 wie durch den Pfeil angedeutet gegen den Uhrzeigersinn und gegen die Kraft der Drehfeder 9 verdreht. Dadurch wird die Sperre zwischen dem Teil 2 und dem Drehteil 13 aufgehoben und bei einer weiteren Drehung des Sperrelements 2 wirkt dessen linke Spitze mit einer Nase des Drehteils 13 zusammen und treibt dieses im Uhrzeigersinn um die Drehachse 12 drehend an. Dadurch wird der Anschlag 130 von dem Anschlag 50 entfernt, so dass der Lehnenabschnitt 5 frei drehbar ist und die Rückenlehne in ihrer Verstauposition überführbar ist, was in Figur 13 dargestellt ist. Das Drehorgan 3 bleibt bei dieser Drehung stationär.

Figuren 14 und 15 zeigen eine weitere Ausführungsform des erfindungsgemäßen Fahrzeugsitzes. Für den Fall, dass sich die Rückenlehne in der Easy-Entry-Position befindet, was in Figur 14 dargestellt ist, und ein Insasse versucht, den Sitz nach vorne in den Bereich von 60 bis 210 mm zu verschieben, wird ein Längsverschiebungssensor 24 aktiviert, d. h. in dem vorliegenden Fall der Hebel 24 gegen den Uhrzeigersinn verdreht. Dadurch wird das Kabel 23 gespannt, das mit seinem einem Ende mit dem Sensor 24 und mit seinem anderen Ende mit einem Anschlag 26 verbunden ist. Dieser Anschlag 26 ist drehbar um die Drehachse 27 gelagert und mittels der Feder 28 gegen den Uhrzeigersinn vorgespannt. Der Sensor 24 verdreht den Anschlag 26 im Uhrzeigersinn, wodurch die Drehung der Rückenlehne auf maximal 15° begrenzt ist, was in Figur 15 dargestellt ist. Der Fachmann erkennt, dass diese Funktion dem erfindungsgemäßen Fahrzeugsitz optional zugefügt werden kann.

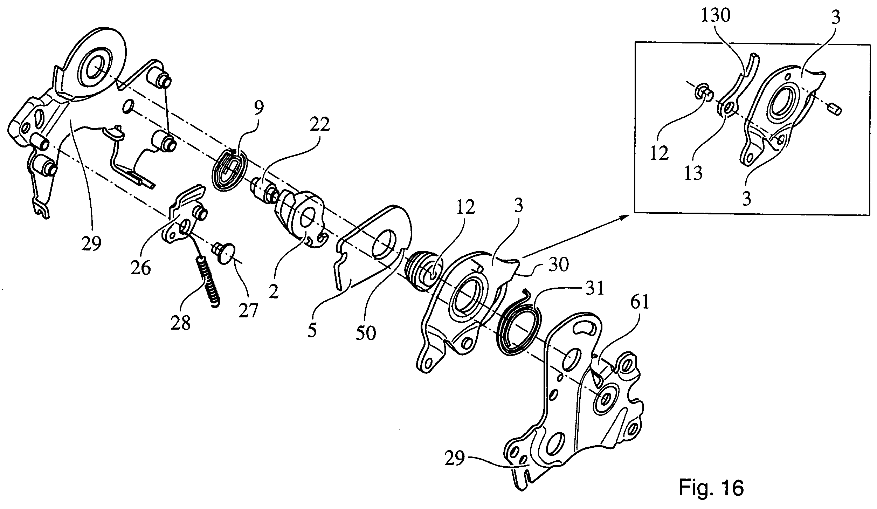

Figur 16 zeigt eine Explosionszeichnung des Beschlages eines Fahrzeugsitzes gemäß dem Stand der Technik.

### Bezugszeichenliste

- 1: Sensorarm
- 2: Sperrelement, Klinke
- 2.1: Drehachse
- 3: Drehorgan
- 4: Sitzpolsterschale
- 5: Lehnenabschnitt
- 6: Führungsarm, Kabel
- 7: Längsarretierungsklinke
- 8: Übertragungsstab, Kabel
- 9: Drehfeder
- 10: Anschlagmittel, Anschlagbolzen
- 11: Einbuchtung, Schlitz
- 12: Drehachse
- 13: Drehteil
- 13.1: Form- und/oder Kraftschlussmittel
- 14: Beschlagteil
- 15: Anschlag
- 16: Kurvenscheibe
- 17: Lager
- 17.1: Form- und/oder Kraftschlussmittel
- 17.2: Lagerfläche
- 18: Drehwelle
- 19: Drehachse
- 20: Rolle
- 21: Federmittel, Drahtfeder
- 22: Drehachse
- 23: Kabel
- 24: Sensor
- 25: Platte
- 26: Anschlag
- 27: Drehachse
- 28: Feder
- 29: Platte
- 30: Anschlagkante
- 31: Drehfeder
- 50: Anschlag
- 60: Leitfläche
- 130: Anschlag
- 61: Stopanschlag
- B: Betätigungskinematik

## Patentansprüche

1. Fahrzeugsitz mit einem Sitzteil (4) und einer Rückenlehne, die jeweils reversibel von einer Gebrauchs- in eine Easy-Entry-Stellung überführbar sind, **dadurch gekennzeichnet, dass** er einen Sensor (24) aufweist, der die Längsstellung des Sitzteils in der Easy-Entry-Stellung erfasst.

2. Fahrzeugsitz nach Anspruch 1, **dadurch gekennzeichnet, dass** der Sensor (24) ein Sperrmittel (26) aktiviert, das die Bewegung der Lehne begrenzt.

## Claims

1. Vehicle seat comprising a seat part (4) and a backrest which in each case may be reversibly moved from a usage position into an easy-entry position, **characterized in that** it comprises a sensor (24)

2. Vehicle seat according to Claim 1, **characterized in that** the sensor (24) activates a locking means (26) which limits the motion of the backrest.

## Revendications

1. Siège de véhicule comprenant une partie de siège (4) et un dossier, qui peuvent être transférés à chaque fois de manière réversible d'une position d'utilisation dans une position facilitant l'accès, **caractérisé en ce qu'**il présente un capteur (24) qui détecte la position longitudinale de la partie de siège dans la position facilitant l'accès.

2. Siège de véhicule selon la revendication 1, **caractérisé en ce que** le capteur (24) active un moyen de blocage (26) qui limite le mouvement du dossier.
